# FASCICULE DE BREVET EUROPEEN

(11) **EP 3 315 403 B1**
(45) Date de publication et mention de la délivrance du brevet: **17.04.2019**
(21) Numéro de dépôt: 17195369.8
(22) Date de dépôt: 09.10.2017
(51) Int. Cl.: B64C 27/33, B64C 27/473

(54) **FAISCEAU TORSIBLE POUR PALE, UN ENSEMBLE DE FAISCEAUX TORSIBLES, UN ROTOR ET UN AERONEF**
FLEXIBLES TORSIONSBÜNDEL FÜR EIN BLATT, EINE ANORDNUNG VON FLEXIBLEN TORSIONSBÜNDELN, EIN ROTOR UND EIN LUFTFAHRZEUG
TORSIONALLY FLEXIBLE BEAM FOR A BLADE, SET OF TORSIONALLY FLEXIBLE BEAMS, A ROTOR AND AN AIRCRAFT

(30) Priorité: 31.10.2016 FR 1601561
(43) Date de publication de la demande: 02.05.2018
(73) Titulaire: Airbus Helicopters, 13725 Marignane Cedex (FR)
(72) Inventeur: VAN-DORSSELAERE, Thomas, 13114 PUYLOUBIER (FR); CELLI, Marc-Antoine, 13100 AIX EN PROVENCE (FR); SFEZ, Eric, 13005 MARSEILLE (FR); JALAGUIER, Jean-Pierre, 13127 VITROLLES (FR)
(74) Mandataire: GPI & Associés

(56) Documents cités:
- EP-A1- 2 246 256
- EP-A1- 2 246 259
- FR-A- 1 543 858
- JP-A- 2003 322 138
- US-A1- 2012 087 797

## Description

La présente invention concerne un faisceau torsible pour pale, un ensemble de faisceaux torsibles, un rotor muni d'un tel faisceau torsible et un aéronef.

Un aéronef peut comprendre au moins un rotor utilisé pour contrôler l'évolution dans l'espace de cet aéronef. Par exemple, un hélicoptère peut comporter un rotor principal participant à la sustentation et à la propulsion de l'hélicoptère, ainsi qu'un rotor arrière participant au contrôle du mouvement en lacet de l'hélicoptère.

Un rotor peut comporter un moyeu qui porte alors une pluralité de pales. Un tel rotor peut par exemple être un rotor caréné participant au contrôle du mouvement en lacet de l'hélicoptère.

Le moyeu est mis en rotation autour d'un axe de rotation par une installation motrice. Un rotor connu comporte ainsi un moyeu fixé à un arbre de transmission par une bride. Chaque pale comporte un tronçon d'emplanture qui est articulé au moyeu par deux paliers pour conférer à la pale un degré de liberté en rotation autour d'un axe de pas. Au moins un des deux paliers peut en outre présenter un jeu pour conférer une liberté de mouvement en battement et en traînée à la pale.

De plus, chaque pale est fixée à un ensemble de lames superposées. Un tel ensemble est dénommé « faisceau torsible ».

Chaque faisceau torsible est fixé à une pale et au moyeu pour notamment absorber les efforts centrifuges subis par la pale. De plus, chaque faisceau torsible présente une raideur en torsion suffisamment faible pour autoriser une rotation de la pale autour de son axe de pas.

Ainsi, chaque faisceau torsible s'étend radialement de l'axe de rotation du rotor vers une pale. En particulier, chaque faisceau torsible comporte un corps rectiligne. Ce corps s'étend radialement d'une extrémité proximale vers une extrémité distale. Cette extrémité distale est prolongée par une zone de raccordement distale qui atteint une attache distale à fixer à une pale. Par exemple, l'attache distale comporte une sangle qui délimite un orifice. Un boulon relie alors l'attache distale à un longeron de la pale en traversant l'orifice de l'attache distale et au moins un orifice du longeron. L'attache distale représente par exemple une chape mâle fixée à une chape femelle de la pale.

Selon une réalisation présente sur l'hélicoptère H120®, le rotor comporte un organe en forme d'étoile, dénommé « étoile » par commodité. Dès lors, l'étoile comporte d'une part un organe central qui est fixé au moyeu et, d'autre part, des faisceaux torsibles qui s'étendent radialement à partir de l'organe central. L'organe central est alors relié à l'extrémité proximale de chaque corps de chaque faisceau torsible.

Selon une autre réalisation, l'extrémité proximale est prolongée par une zone de raccordement proximale. La zone de raccordement proximale est accolée à une attache proximale fixée au moyeu. Dès lors, le faisceau torsible comporte, successivement et radialement de l'axe de rotation du rotor vers la pale, l'attache proximale, la zone de raccordement proximale, le corps, la zone de raccordement distale puis l'attache distale.

Quelle que soit la réalisation, chaque faisceau torsible comprend plusieurs lames en matériaux composites ou métalliques empilées les unes sur les autres. Plusieurs dizaines de lames superposées peuvent constituer chaque faisceau, chaque lame présentant une épaisseur de sensiblement 0.2 millimètre selon la direction d'empilement des lames.

Le nombre de lames, leur épaisseur, leur emplacement dans le rotor et leur intervalle d'inspection sont par exemple calculés pour :
- qu'en fonctionnement nominal, le faisceau torsible présente une durée de vie infinie, et ne perturbe pas le fonctionnement du rotor,
- que le faisceau torsible puisse être mis en oeuvre sur divers rotors,
- qu'en cas de défaillance d'une lame du faisceau torsible, le vol puisse être poursuivi en toute sécurité jusqu'à son terme.

Selon une première réalisation connue de faisceau torsible, les lames du faisceau torsible sont identiques et superposées les unes sur les autres.

Le corps du faisceau torsible s'étend longitudinalement de son extrémité proximale vers son extrémité distale, latéralement d'un premier flanc latéral vers un deuxième flanc latéral et en élévation selon son épaisseur d'une première face vers une deuxième face.

Le corps du faisceau torsible présente une forme de pavé rectangulaire. Dès lors, chaque lame s'étend latéralement au niveau du corps d'un premier flanc latéral rectiligne à un deuxième flanc latéral rectiligne.

Par ailleurs, l'attache distale du faisceau torsible s'étend longitudinalement à partir du corps et en élévation d'une première face vers une deuxième face. En outre, l'attache distale présente un flanc d'extrémité semi-circulaire reliant en élévation la première face et la deuxième face.

Dès lors, l'extrémité distale est prolongée par une zone de raccordement distale raccordant le corps à l'attache distale. Plus précisément, la zone de raccordement distale comporte un premier flanc de raccordement distal concave présentant un faible rayon de courbure et un deuxième flanc de raccordement distal concave présentant aussi un faible rayon de courbure. Le flanc d'extrémité relie alors le premier flanc de raccordement distal au deuxième flanc de raccordement distal.

Le risque de défaillance d'une lame d'un faisceau torsible peut conduire à un glissement longitudinal de cette lame par rapport à une autre lame.

Selon la réalisation, l'extrémité proximale est prolongée vers l'axe de rotation du rotor par une zone de raccordement proximale du type de la zone de raccordement distale.

De surcroît, chaque faisceau torsible peut être équipé d'une gaine thermo-rétractable agencée autour du corps afin de prévenir la rupture d'une lame. En cas de rupture d'une lame, la gaine vise à limiter l'endommageant du rotor en emprisonnant la portion cassée de la lame. La gaine peut tendre se déplacer vers l'extrémité distale du faisceau torsible sous la contrainte des efforts centrifuges, amoindrissant alors son efficacité.

Un faisceau torsible muni de lames strictement identiques et empilées les unes sur les autres est dénommé faisceau « mono-étagé » par commodité.

Un faisceau mono-étagé donne satisfaction. Cependant, les sections sollicitées en traction et les sections sollicitées en torsion sont représentées par les mêmes sections du faisceau torsible, et se situent sensiblement au niveau de la section la plus large transversalement de la zone de raccordement distale.

En outre, les zones de contraintes critiques en torsion sont réparties sur un nombre limité de lames.

Des faisceaux dits « bi-étagé » sont aussi connus, et ont été mis en place sur l'hélicoptère H120®.

Un faisceau bi-étagé présente deux types de lames.

Un premier type de lame comprend des lames étroites, et un deuxième type de lame comprend des lames larges.

Dans chaque plan perpendiculaire à l'axe de pas de la pale les lames larges présentent des sections plus larges que les lames étroites. Ainsi, la largeur du corps des lames étroites séparant le premier flanc latéral du deuxième flanc latéral est inférieure à la largeur du corps des lames larges. De même, le rayon du flanc d'extrémité de l'attache distale d'une lame étroite est inférieur au rayon du flanc d'extrémité de l'attache distale d'une lame large.

Dès lors, les lames larges sont en saillie des lames étroites sur tout le pourtour des lames étroites.

Toutes les lames étroites sont identiques entre elles, et toutes les lames larges sont identiques entre elles.

En particulier et selon son épaisseur, le faisceau comporte un élément feuilleté inférieur comprenant des lames étroites superposées. Cet élément feuilleté inférieur est recouvert d'un élément feuilleté intermédiaire comprenant des lames larges superposées. Enfin, l'élément feuilleté intermédiaire inférieur est recouvert d'un élément feuilleté supérieur comprenant des lames étroites superposées.

L'élément feuilleté supérieur est à l'aplomb de l'élément feuilleté inférieur. Par contre, l'élément feuilleté intermédiaire est en saillie de l'élément feuilleté supérieur et de l'élément feuilleté inférieur sur tous leurs pourtours.

L'avantage de cette définition est de distribuer de manière plus homogène les zones de contraintes critiques en torsion, à savoir sur plus de lames qu'avec une définition mono-étagée.

Toutefois, ce type de montage présente l'inconvénient de plus solliciter en traction les lames larges que les lames étroites. L'effort centrifuge exercé sur la pale impose effectivement une contrainte en déplacement identique à toutes les lames pour chaque faisceau. La raideur en traction des lames larges d'un faisceau étant supérieure à la raideur en traction des lames étroites, cette définition tend à « surcontraindre » en traction les lames larges au niveau de l'attache distale par rapport aux lames étroites.

Par ailleurs, la mise en place de lames larges tend à maximiser la masse du faisceau torsible et son encombrement.

Le document FR 2948097 est éloigné de cette problématique en présentant un moyen de retenue d'une pale.

Le document US 2013/0034442 présente une unité plane flexible.

Le document US 3765267 présente un organe liant deux pales.

Les documents EP 2 246 256 A1, JP 2003 322138 A, US 2012/087797 A1, EP 2 246 259 A1, et FR 1 543 858 A sont aussi connus.

La présente invention a alors pour objet de proposer un faisceau torsible innovant pour la tenue d'une pale d'un rotor.

Selon l'invention, comme définit dans la revendication 1, un faisceau torsible comprend une pluralité de lames empilées les unes sur les autres selon un axe en élévation. Chaque lame comprend successivement le long d'un axe d'extension un tronçon de corps puis un tronçon de raccordement distal puis un tronçon distal qui forment respectivement une strate d'un corps, une strate d'une zone de raccordement distale et une strate d'une attache distale du faisceau torsible. L'attache distale comprend un moyen de fixation permettant de fixer ladite attache distale à une pale, tel qu'un orifice à visser à une pale par exemple.

Le faisceau torsible s'étend en épaisseur selon un axe en élévation orthogonal à l'axe d'extension d'une première face d'une lame à une deuxième face d'une autre lame, le faisceau torsible comprenant un pourtour muni d'un flanc s'étendant en élévation de la première face à la deuxième face.

Chaque tronçon de corps s'étend alors transversalement d'une partie dudit flanc dite « premier flanc latéral » vers une partie dudit flanc dit « deuxième flanc latéral », chaque tronçon de raccordement distal s'étendant transversalement d'une partie dudit flanc dite « premier flanc de raccordement distal » qui prolonge le premier flanc latéral de la lame vers une partie dudit flanc dit « deuxième flanc de raccordement distal » qui prolonge le deuxième flanc latéral de la lame, chaque lame comprenant dans ladite attache distale un tronçon dudit flanc dit « flanc d'extrémité distal » qui s'étend du premier flanc de raccordement distal au deuxième flanc de raccordement distal de la lame.

Les lames forment au moins un élément feuilleté dit élément feuilleté large et un élément feuilleté dit élément feuilleté étroit, et :
- les tronçons de corps sont superposées et identiques au niveau du corps, chaque tronçon de corps présentant une largeur dite « largeur de corps » parallèlement à un axe orthogonal à l'axe d'extension et à l'axe en élévation, cette largeur de corps étant minimale au niveau d'un ventre du corps, la largeur de corps augmentant longitudinalement selon un premier sens allant du ventre vers la zone de raccordement distale et selon un deuxième sens opposé au premier sens,
- les tronçons distaux sont superposées et identiques au niveau de l'attache distale,
- chaque tronçon de raccordement distal d'un élément feuilleté large est en saillie latérale par rapport au premier flanc de raccordement distal et au deuxième flanc de raccordement distal de chaque tronçon de raccordement distal d'un élément feuilleté étroit,
- le premier flanc de raccordement distal et le deuxième flanc de raccordement distal de chaque lame suivent chacun une courbe concave non circulaire, le tronçon de raccordement distal de chaque lame présentant une largeur distale entre son premier flanc de raccordement distal et son deuxième flanc de raccordement distal qui augmente selon ledit premier sens.

L'expression « identiques et superposées » signifie que les éléments concernés sont disposés strictement l'un au dessus de l'autre afin qu'un élément ne saille pas latéralement de l'autre élément.

Les axes en élévation, longitudinaux et transversaux peuvent être concourants, par exemple au niveau d'un ventre d'une lame.

Dès lors, le faisceau torsible comporte plusieurs lames, empilées les unes sur les autres selon les techniques usuelles. Par exemple, l'enseignement du document FR 2699497 peut être appliqué. Les lames peuvent par exemple être métalliques, en matériaux composites...

Le faisceau torsible présente un corps et une attache distale mono-étagés puisque les tronçons des lames sont identiques et superposés dans ces portions du faisceau torsible.

Par contre, la zone de raccordement distale est bi-étagée puisque chaque élément feuilleté large déborde transversalement de part et d'autre d'un élément feuilleté étroit adjacent.

Par suite, le faisceau torsible n'est ni un faisceau totalement mono-étagée ni un faisceau totalement bi-étagé au sens de l'état de l'art, mais un faisceau complexe comprenant des portions mono-étagées et au moins une portion bi-étagée.

De plus, le corps n'est pas rectiligne mais présente une largeur variable qui atteint un minimum au niveau d'une section dénommée « ventre », à savoir au niveau d'une section comprise dans un plan parallèle à l'axe en élévation et à l'axe transversal.

En outre, la zone de raccordement proximale ne présente pas des flancs en arc de cercle mais des flancs à largeur évolutive complexe. Les flancs peuvent par exemple présenter un profil suivant une portion d'ellipse.

La synergie de ces caractéristiques tend à conférer au faisceau les avantages des faisceaux mono-étagés et bi-étagés connus.

En effet, la géométrie obtenue permet de positionner la zone de contrainte critique en traction vers le ventre du corps, et non plus au niveau de la zone de raccordement distale.

La zone de contrainte critique en torsion reste, quant à elle, sensiblement localisée au même endroit qu'avec un faisceau mono-étagé, tout en bénéficiant de l'effet bi-étagé. En effet, la géométrie de la zone de raccordement distale permet de répartir les contraintes en torsion sur une pluralité de lames.

Grâce à cette nouvelle distribution des contraintes critiques, la largeur du corps du faisceau torsible peut éventuellement être réduite, en comparaison aux conceptions mono-étagées ou bi-étagées de l'art antérieur. En conséquence, la raideur en torsion du faisceau torsible est minimisée diminuant ainsi l'effort de commande nécessaire pour modifier le pas des pales. Par effet de cascade, les contraintes en torsion exercées sur le faisceau torsible lors de la commande du pas des pales d'un rotor sont elles-aussi diminuées, en particulier dans la zone critique.

La réduction des contraintes critiques peut tendre à minimiser le nombre de lames utilisées, et donc à minimiser la masse du faisceau torsible. Par exemple, douze lames empilées les unes sur les autres peuvent être utilisées.

Par ailleurs, la mise en oeuvre d'un corps mono-étagé tend à homogénéiser les contraintes en traction entre les lames larges et les lames étroites. Par conséquent, cette géométrie permet d'implémenter une attache distale mono-étagée.

Dès lors, le faisceau torsible peut tendre à :
- diminuer les contraintes dans les zones critiques du faisceau torsible, et/ou à
- diminuer la raideur en torsion intrinsèque du faisceau torsible, et/ou à
- diminuer le nombre de lames, et/ou à
- diminuer la masse du faisceau torsible, et/ou à
- réduire l'encombrement du faisceau torsible.

Le faisceau torsible peut de plus comporter une ou plusieurs des caractéristiques qui suivent.

Chaque lame peut présenter une épaisseur constante en élévation entre une face dite « face inférieure » et une face dite « face supérieure », chaque lame étant plane en étant contenue dans un plan présentant une épaisseur égale à l'épaisseur de la lame.

Les lames ont ainsi une géométrie relativement simple.

Selon un autre aspect, le ventre d'une lame peut être positionné longitudinalement au niveau d'un plan central du corps.

Le tronçon de corps de chaque lame s'étend d'une section d'extrémité proximale à relier à un moyeu à une section d'extrémité distale accolée à un tronçon de raccordement distal. Le ventre peut ainsi être situé à égale distance de la section d'extrémité proximale et de la section d'extrémité distale.

Selon un autre aspect, la largeur de corps d'une lame peut être maximale au niveau d'une section d'interface avec la zone de raccordement distale.

Eventuellement, le tronçon de corps présente une symétrie axiale au regard d'un plan central passant par le ventre de la lame.

Selon un autre aspect, la largeur de corps d'une lame peut varier continûment entre le ventre et la zone de raccordement distale.

La largeur de corps d'une lame peut aussi varier continûment entre le ventre et la section d'extrémité proximale.

Selon un autre aspect, au moins un des premier flanc latéral et deuxième flanc latéral décrit un arc d'un cercle présentant un rayon dit « rayon latéral ».

Le terme « rayon » désigne le rayon d'un cercle géométrique contenant le flanc concerné.

Le premier flanc latéral et/ou le deuxième flanc latéral peuvent être concaves en présentant un côté convexe en regard l'un de l'autre.

Eventuellement, chaque premier flanc de raccordement et chaque deuxième flanc de raccordement décrivent une courbe évolutive en présentant successivement en partant du corps vers l'attache distale un tronçon en arc de cercle présentant un premier rayon de raccordement et un tronçon en arc de cercle présentant un deuxième rayon de raccordement, le premier rayon de raccordement étant supérieur au deuxième rayon de raccordement.

Cette géométrie optimise le niveau de contrainte de la zone de contrainte critique en traction.

Le cas échéant, le rayon latéral peut être supérieur au premier rayon de raccordement.

Selon un autre aspect, le faisceau torsible peut comporter en élévation un élément feuilleté étroit dit « premier élément feuilleté étroit » muni d'une pluralité de lames, puis un élément feuilleté large muni d'une pluralité de lames et enfin un élément feuilleté étroit dit « deuxième élément feuilleté étroit » muni d'une pluralité de lames, le deuxième élément feuilleté étroit étant à l'aplomb du premier élément feuilleté étroit.

Un élément feuilleté représente donc un ensemble de lames, soit un sous-ensemble en élévation du faisceau torsible. Les éléments feuilletés peuvent avoir éventuellement le même nombre de lames, et par exemple quatre lames pour chaque élément feuilleté.

Le nombre de lames peut ainsi être optimisé.

Eventuellement, le deuxième élément feuilleté étroit est identique au premier élément feuilleté étroit.

Le deuxième élément feuilleté et le premier élément feuilleté étroit peuvent être disposés symétriquement de part et d'autre de l'élément feuilleté large.

Selon un autre aspect, chaque lame comprenant un tronçon de raccordement proximal formant une zone de raccordement proximale du faisceau torsible, ledit corps s'étend longitudinalement entre la zone de raccordement proximale et la zone de raccordement distale, chaque tronçon de raccordement proximal s'étendant transversalement d'une partie dudit flanc dite « premier flanc de raccordement proximal » prolongé selon le premier sens par le premier flanc latéral de la lame vers une partie dudit flanc dit « deuxième flanc de raccordement proximal » prolongé selon le premier sens par le deuxième flanc latéral de la lame, chaque tronçon de raccordement proximal d'un élément feuilleté large est en saillie latérale par rapport au premier flanc de raccordement proximal et au deuxième flanc de raccordement proximal de chaque tronçon de raccordement proximal d'un élément feuilleté étroit, le premier flanc de raccordement proximal et le deuxième flanc de raccordement proximal de chaque lame suivant chacun une courbe concave non circulaire, le tronçon de raccordement proximal de chaque lame présentant une largeur proximale entre son premier flanc de raccordement proximal et son deuxième flanc de raccordement proximal qui augmente selon ledit deuxième sens.

La zone de raccordement proximale peut comprendre au moins une des caractéristiques de la zone de raccordement distale décrites précédemment.

Selon un autre aspect, le faisceau torsible comporte une gaine rétractable agencée autour du corps.

La géométrie particulière du faisceau torsible tend à optimiser le maintien de la gaine rétractable sur le corps, pour limiter les conséquences d'une éventuelle rupture de lame.

Selon une première réalisation, chaque lame comprenant successivement le long dudit axe d'extension un tronçon d'attache proximal puis ledit tronçon de raccordement proximal, lesdits tronçons d'attache proximaux formant une attache proximale apte à être fixée à un moyeu, lesdits tronçons d'attache proximaux sont superposés et identiques au niveau de l'attache proximale.

Par exemple, chaque lame comporte un orifice pour obtenir une attache proximale munie d'un orifice de fixation à visser à un moyeu.

Selon une deuxième réalisation explicitée par la suite, la zone de raccordement proximale peut être accolée à un organe central d'une étoile.

Ainsi, l'invention vise aussi un ensemble de faisceaux torsibles comprenant un organe central mobile en rotation autour d'un axe de rotation, cet ensemble de faisceaux torsibles comprenant une pluralité de faisceaux torsibles s'étendant radialement à partir de l'organe central.

Chaque faisceau torsible est du type de l'invention, la zone de raccordement proximale de chaque faisceau torsible étant attachée audit organe central.

Dès lors, l'ensemble de faisceaux torsibles peut être obtenu selon les techniques usuelles.

Eventuellement, l'ensemble de faisceaux torsibles comporte une étoile de protection, cette étoile de protection comprenant une partie centrale conformée à l'organe central et agencée contre l'organe central, cette étoile de protection comprenant des branches s'étendant partiellement sous chaque faisceau torsible, chaque branche s'étendant radialement de la partie centrale vers une extrémité attachée par un lien au corps d'un faisceau torsible.

Le terme « partiellement » signifie qu'une branche de l'étoile de protection ne s'étend pas sous la totalité de la longueur du faisceau torsible. Par exemple, le lien et le bout d'une branche sont positionnés entre le ventre et la zone de raccordement proximale d'un faisceau torsible.

L'invention vise de plus un rotor muni d'un moyeu portant une pluralité de pales, chaque pale étant fixée à un faisceau torsible.

Chaque faisceau torsible peut être du type de l'invention, la zone de raccordement distale de chaque faisceau torsible étant attachée à une pale.

Ce rotor peut être un rotor d'aéronef, et en particulier un rotor participant au contrôle du mouvement en lacet de l'aéronef.

L'invention et ses avantages apparaîtront avec plus de détails dans le cadre de la description qui suit avec des exemples donnés à titre illustratif en référence aux figures annexées qui représentent :
- la figure 1, une vue en trois dimensions d'un faisceau torsible selon l'invention muni d'une attache proximale et d'une attache distale,
- la figure 2, une vue de côté d'un faisceau torsible selon l'invention muni d'une attache proximale et d'une attache distale,
- la figure 3, une vue de dessus d'une lame selon l'invention,
- la figure 4, une vue explicitant une zone de raccordement d'une lame selon l'invention,
- la figure 5, une vue en trois dimensions d'un faisceau torsible selon l'invention muni d'une attache distale et fixé à un organe central d'un ensemble de faisceaux torsibles,
- la figure 6, une vue en trois dimensions d'un ensemble de faisceaux torsibles selon l'invention,
- les figures 7 à 9, des vues illustrant l'agencement d'un faisceau torsible selon l'invention.

Les éléments présents dans plusieurs figures distinctes sont affectés d'une seule et même référence.

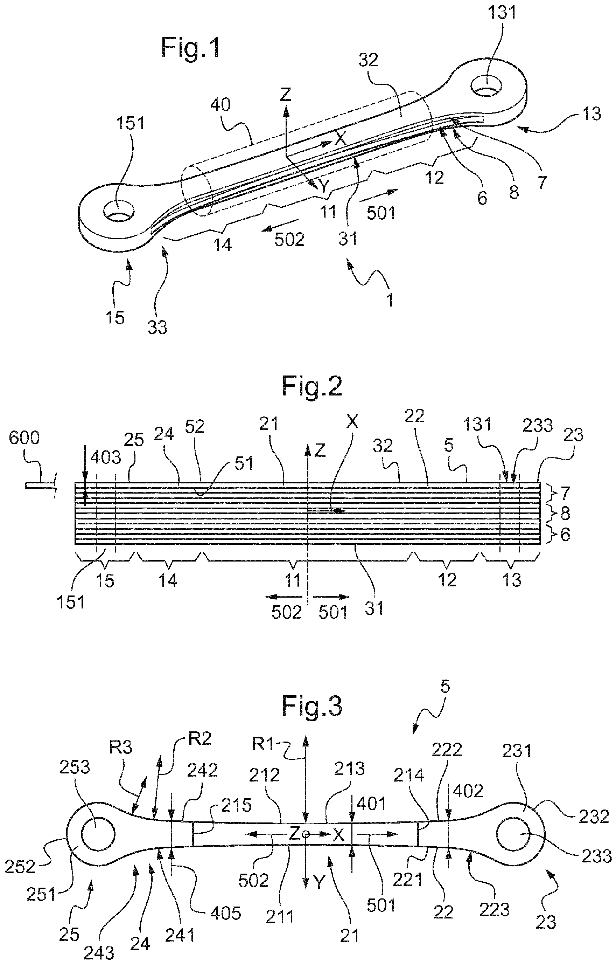

Trois directions X, Y et Z orthogonales les unes par rapport aux autres sont représentées sur certaines figures 1 à 4.

La première direction X est dite longitudinale. Le terme « longitudinal » et le terme « extension » sont relatifs à toute direction parallèle à la première direction X.

La deuxième direction Y est dite transversale. Le terme « transversal » est relatif à toute direction parallèle à la deuxième direction Y. Le terme « largeur » est à considérer au regard de cette direction.

Enfin, la troisième direction Z est dite en élévation. L'expression « en élévation » est relative à toute direction parallèle à la troisième direction Z. Le terme « épaisseur » est à considérer au regard de cette direction.

La figure 1 présente un faisceau torsible 1 selon l'invention destiné à relier une pale à un moyeu.

Le faisceau torsible 1 s'étend longitudinalement le long de la direction d'extension X, transversalement le long de la direction transversale Y, et en élévation le long de la direction en élévation Z.

En particulier, le faisceau torsible s'étend en élévation d'une première face 31 plane à une deuxième face 32 plane. Dès lors, le faisceau torsible comporte un pourtour muni d'un flanc 33 qui s'étend en élévation de la première face 31 à la deuxième face 32.

En référence à la figure 2, le faisceau torsible 1 est constitué d'une pluralité de lames 5 qui sont empilées les unes sur les autres selon la direction en élévation Z. Par exemple, le faisceau torsible comporte douze lames.

En particulier, le faisceau torsible comporte au moins un empilement formant un élément feuilleté qualifié « d'élément feuilleté étroit 6,7 ». De plus, le faisceau torsible comporte au moins un empilement formant un élément feuilleté qualifié « d'élément feuilleté large 8 ».

Selon l'exemple de la figure 2, le faisceau torsible 1 comporte successivement de bas en haut et en élévation un premier élément feuilleté étroit 6, un élément feuilleté large 8 puis un deuxième élément feuilleté étroit 8. Chaque élément feuilleté 6, 7, 8 comporte par exemple un même nombre de lames, à savoir quatre lames selon la figure 2 pour un total de douze lames.

Chaque lame 5 s'étend en élévation selon son épaisseur d'une face inférieure 51 à une face supérieure 52. Cette épaisseur est par exemple constante. Chaque lame est alors plane en étant contenue dans un plan 600 présentant une épaisseur égale à l'épaisseur de la lame.

Dès lors, chaque lame est en contact avec une autre lame par sa face inférieure 51 ou sa face supérieure 52. De bas en haut sur la figure 2, la première lame du premier élément feuilleté étroit 6 présente une face inférieure matérialisant la première face 31 du faisceau torsible. La dernière lame du deuxième élément feuilleté étroit 7 présente alors une face supérieure matérialisant une face dite deuxième face 32 du faisceau torsible.

Par ailleurs, chaque lame 5 comprend selon un premier sens 501 et successivement le long d'un axe d'extension X, un tronçon dit « tronçon de corps 21 » par commodité, puis un tronçon dit « tronçon de raccordement distal 22 » par commodité et enfin un tronçon dit « tronçon distal 23 » ou « tronçon d'attache distal 23 » par commodité. Le tronçon de corps 21 ainsi que le tronçon de raccordement distal 22 et le tronçon distal 23 forment respectivement une couche d'un corps 11, une couche d"une zone de raccordement distale 12 et une couche d'une attache distale 13 du faisceau torsible 1.

En effet, les tronçons de corps 21 empilés les uns sur les autres forment le corps 11 du faisceau torsible 1. De même, les tronçons de raccordement distal 22 empilés les uns sur les autres forment la zone de raccordement distale 12 du faisceau torsible 1. Les tronçons distaux 23 empilés les uns sur les autres forment l'attache distale 13 du faisceau torsible 1.

Cette attache distale comporte un moyen de fixation 131 pour être attachée à une pale. Un tel moyen de fixation 131 peut prendre la forme d'un orifice, par exemple en forme de cylindre creux, obtenu par la superposition d'orifices 233 de chaque lame.

Eventuellement, chaque lame 5 peut comprendre un tronçon de raccordement proximal 24 qui prolonge, selon un deuxième sens 502 opposé au premier sens 501, le tronçon de corps 21, voire un tronçon d'attache proximal 25 qui prolonge selon le deuxième sens le tronçon de raccordement proximal 24. Les tronçons de raccordement proximaux 24 empilés les uns sur les autres forment une zone de raccordement proximale 14 du faisceau torsible 1. Les tronçons d'attache proximaux 25 empilés les uns sur les autres forment une attache proximale 15 du faisceau torsible 1.

Cette attache proximale 15 peut comporter un organe de fixation 151 pour être attaché à un moyeu. Un tel organe de fixation 151 peut prendre la forme d'un orifice, par exemple en forme de cylindre creux, obtenu par la superposition d'orifices 253 de chaque lame.

La figure 3 illustre une lame 5 du faisceau torsible.

Le tronçon de corps 21 de la lame s'étend donc en extension d'une section d'interface proximale 215 à une section d'interface distale 214. La section d'interface proximale 215 est éventuellement solidarisée à un tronçon de raccordement proximal 24, alors que la section d'interface distale 214 est solidarisée au tronçon de raccordement distal 22 La section d'interface proximale 215 et la section d'interface distale 214 sont disposées de part et d'autre d'un ventre 213.

Le terme « ventre » désigne une section des lames mais aussi du corps situé dans un plan qui s'étend en élévation et transversalement.

Eventuellement, la section d'interface proximale 215 et la section d'interface distale 214 sont par exemple disposées symétriquement de part et d'autre du ventre 213. Le ventre d'une lame est alors positionné au niveau d'un plan central du corps.

De plus, le tronçon de corps 21 s'étend transversalement d'une partie dudit flanc dite « premier flanc latéral 211 » vers une partie dudit flanc dit « deuxième flanc latéral 212 ».

Le tronçon de corps 21 d'une lame présente une largeur dite « largeur de corps 401 » parallèlement à l'axe transversal Y. Cette largeur de corps 401 est minimale au niveau du ventre 213.

De plus, la largeur de corps 401 augmente longitudinalement selon un premier sens 501 allant du ventre 213 vers la section d'interface distale 214, et selon le deuxième sens 502 opposé au premier sens 501 vers la section d'interface proximale 215.

Par exemple, la largeur de corps augmente continûment pour être maximale au niveau de la section d'interface distale 214 et de la section d'interface proximale 215.

En outre, le premier flanc latéral 211 peut décrire un arc de cercle concave présentant un rayon dit « rayon latéral R1 ». De même, le deuxième flanc latéral 212 peut décrire un arc de cercle concave présentant le rayon latéral R1.

Par ailleurs, le tronçon de raccordement distal 22 d'une lame s'étend selon le premier sens 501 de la section d'interface distale 214 vers le tronçon d'attache distal 23.

De plus, le tronçon de raccordement distal 22 s'étend transversalement d'une partie du flanc dite « premier flanc de raccordement distal 221 » vers une partie du flanc dite « deuxième flanc de raccordement distal 222. Dès lors, le premier flanc de raccordement distal 221 prolonge le premier flanc latéral 211 selon le premier sens, alors que le deuxième flanc de raccordement distal 222 prolonge le deuxième flanc latéral 212 de la lame selon le premier sens.

Eventuellement, le premier flanc de raccordement distal 221 et le deuxième flanc de raccordement distal 222 suivent chacune une courbe évolutive 223 concave non circulaire, en s'écartant l'un de l'autre. Le terme « suive » signifie que dans un plan de coupe, le premier flanc de raccordement distal 221 et le deuxième flanc de raccordement distal 222 sont chacun confondus avec une telle courbe.

Dès lors, le tronçon de raccordement distal 22 présente une largeur dite « largeur distale 402 » entre son premier flanc de raccordement distal 221 et son deuxième flanc de raccordement distal 222. La largeur distale 402 augmente en s'éloignant du tronçon de corps.

Par exemple, le premier flanc de raccordement distal 221 et le deuxième flanc de raccordement distal 222 décrivent une courbe évolutive 223.

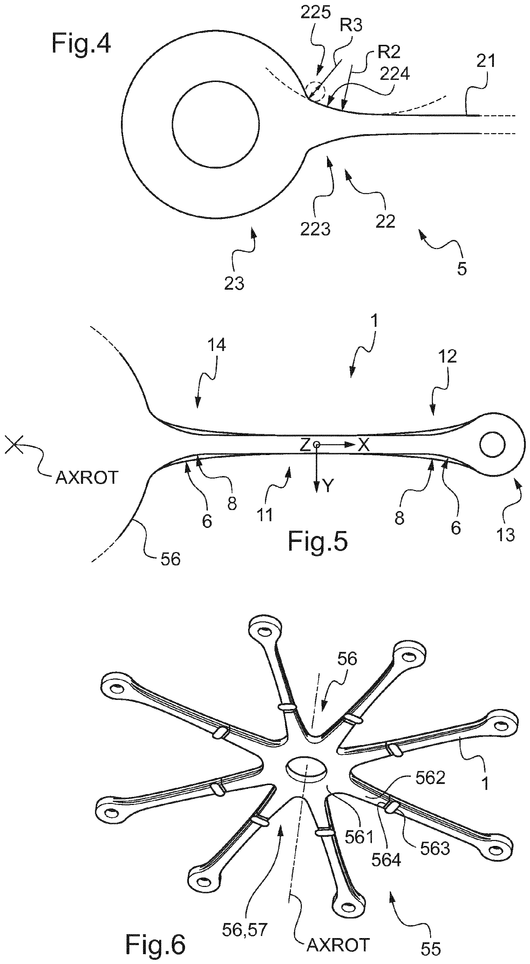

En référence à la figure 4, cette courbe évolutive 223 peut présenter successivement en partant du corps 11 vers l'attache distale 13 un premier tronçon en arc de cercle 224 présentant un premier rayon de raccordement R2 puis un deuxième tronçon en arc de cercle 225 présentant un deuxième rayon de raccordement R3. Le premier rayon de raccordement R2 est supérieur au deuxième rayon de raccordement R3, voire inférieur au rayon latéral R1.

En référence à la figure 3, la lame comprend un tronçon distal 23 qui prolonge selon le premier sens 501 le tronçon de raccordement distal 22.

Le tronçon distal 23 présente une partie dudit flanc dite « flanc d'extrémité distal 232 » qui s'étend du premier flanc de raccordement distal 221 au deuxième flanc de raccordement distal 222 de la lame.

Par exemple, le tronçon distal 23 comporte une sangle, par exemple une sangle décrivant une portion d'un anneau, reliée à la zone de raccordement distale 22.

Par ailleurs, un tronçon de raccordement proximal 24 d'une lame peut s'étendre selon le deuxième sens 502 à partir de la section d'interface proximale 215 vers un moyeu.

De plus, le tronçon de raccordement proximal 24 s'étend transversalement d'une partie du flanc dite « premier flanc de raccordement proximal 241 » vers une partie du flanc dite « deuxième flanc de raccordement proximal 242. Dès lors, le premier flanc de raccordement proximal 241 prolonge le premier flanc latéral 211 selon le deuxième sens, alors que le deuxième flanc de raccordement proximal 242 prolonge le deuxième flanc latéral 212 de la lame selon le deuxième sens.

Eventuellement, le premier flanc de raccordement proximal 241 et le deuxième flanc de raccordement proximal 242 suivent chacun une courbe évolutive concave non circulaire, en s'écartant l'un de l'autre. Dès lors, le tronçon de raccordement proximal 24 présente une largeur dite « largeur proximale 405 » entre son premier flanc de raccordement proximal 241 et son deuxième flanc de raccordement proximal 242. La largeur proximale augmente en s'éloignant du tronçon de corps.

Par exemple, le premier flanc de raccordement proximal 241 et le deuxième flanc de raccordement proximal 242 décrivent une courbe évolutive 223. Cette courbe évolutive peut présenter successivement en partant du corps 11 un premier tronçon en arc de cercle présentant un premier rayon de raccordement R2 puis un deuxième tronçon en arc de cercle présentant un deuxième rayon de raccordement R3. Le premier rayon de raccordement R2 est supérieur au deuxième rayon de raccordement R3, voire inférieur au rayon latéral R1.

Selon une première réalisation, la lame comprend un tronçon d'attache proximal 25 qui prolonge selon le deuxième sens 502 le tronçon de raccordement proximal 24. Le tronçon proximal 24 présente une partie dudit flanc dite « flanc d'extrémité proximal 252 » qui s'étend du premier flanc de raccordement proximal 241 au deuxième flanc de raccordement proximal 242 de la lame. Par exemple, le tronçon distal 23 comporte une sangle 251, par exemple une sangle décrivant une portion d'un anneau, reliée à la zone de raccordement proximale 24.

En référence à la figure 1, les tronçons de corps 21 des lames sont superposés et identiques au niveau du corps 11. Dès lors, les premiers flancs latéraux des lames sont agencés au droit les uns des autres. De même, les deuxièmes flancs latéraux des lames sont agencés au droit l'un de l'autre.

De même, les tronçons distaux 23 des lames sont superposés et identiques au niveau de l'attache distale 13. Dès lors, les flancs d'extrémité distaux des lames sont agencés au droit les uns des autres.

Le cas échéant, les tronçons d'attache proximaux 25 des lames sont superposés et identiques au niveau de l'attache proximale 15. Dès lors, les flancs d'extrémité proximaux des lames sont agencés au droit les uns des autres.

Le corps, l'attache distale et le cas échéant l'attache proximale sont donc des organes mono-étagés.

A l'inverse, la zone de raccordement distale 12 est bi-étagée.

En effet, les divers éléments feuilletés étroits sont identiques et au droit les uns des autres dans la zone de raccordement distale 12. Ainsi, le deuxième élément feuilleté étroit 7 est identique au premier élément feuilleté étroit 6 dans la zone de raccordement distale 12. De plus, les premiers flancs de raccordement distaux des lames des éléments feuilletés étroits sont agencés au droit les uns des autres. De même, les deuxièmes flancs de raccordement distaux des lames des éléments feuilletés étroits sont agencés au droit les uns des autres.

Les premiers flancs de raccordement distaux des lames des éléments feuilletés larges sont aussi agencés au droit les uns des autres. De même, les deuxièmes flancs de raccordement distaux des lames des éléments feuilletés larges sont agencés au droit les uns des autres.

Par contre, chaque tronçon de raccordement distal 22 d'un élément feuilleté large 8 est en saillie latérale par rapport au premier flanc de raccordement distal 221 et au deuxième flanc de raccordement distal 222 de chaque tronçon de raccordement distal 22 d'un élément feuilleté étroit 6, 7. Chaque tronçon de raccordement distal 22 d'un élément feuilleté large 8 déborde donc transversalement de part et d'autre des tronçons de raccordement distaux des éléments feuilletés étroits.

Vu de dessus, chaque flanc de raccordement distal des lames des éléments feuilletés étroits est compris transversalement entre le premier flanc de raccordement distal et le deuxième flanc de raccordement distal d'un élément feuilleté large.

De la même manière, la zone de raccordement proximale peut le cas échéant être bi-étagée.

Les divers éléments feuilletés étroits sont identiques et au droit les uns des autres dans la zone de raccordement proximale 14. Ainsi, le deuxième élément feuilleté étroit 7 est identique au premier élément feuilleté étroit 6 dans la zone de raccordement proximale 14. De plus, les premiers flancs de raccordement proximaux des lames des éléments feuilletés étroits sont agencés au droit les uns des autres. De même, les deuxièmes flancs de raccordement proximaux des lames des éléments feuilletés étroits sont agencés au droit les uns des autres.

Les premiers flancs de raccordement proximaux des lames des éléments feuilletés larges sont aussi agencés au droit les uns des autres. De même, les deuxièmes flancs de raccordement proximaux des lames des éléments feuilletés larges sont agencés au droit les uns des autres.

Par contre, chaque tronçon de raccordement proximal d'un élément feuilleté large est en saillie latérale par rapport au premier flanc de raccordement proximal et au deuxième flanc de raccordement proximal de chaque tronçon de raccordement proximal d'un élément feuilleté étroit. Chaque tronçon de raccordement proximal d'un élément feuilleté large déborde donc transversalement de part et d'autre des tronçons de raccordement proximaux des éléments feuilletés étroits.

Selon un autre aspect, le faisceau torsible 1 peut comporter une gaine 40, par exemple thermo-rétractable. Cette gaine 40 est agencée autour du corps 11.

Les figures 1 à 4 illustrent un faisceau torsible muni d'une attache proximale.

Selon le deuxième mode de réalisation de la figure 5, le faisceau torsible peut être agencé sur un ensemble de faisceaux torsibles.

Un tel ensemble 55 de faisceaux torsibles comprend un organe central 56 mobile en rotation autour d'un axe de rotation AXROT. Cet ensemble 55 de faisceaux torsibles comprend une pluralité de faisceaux torsibles 5 s'étendant radialement à partir de l'organe central 56.

Dès lors, la zone de raccordement proximale 14 de chaque faisceau torsible 1 est le cas échéant fixée à l'organe central 56.

En référence à la figure 5, l'ensemble 55 peut comporter une étoile de protection 57.

Cette étoile de protection 57 possède une partie centrale 561 conformée à l'organe central 56 et agencée contre l'organe central 56. Le terme « conformée » indique que la partie centrale 561 a la même forme que l'organe central.

L'étoile de protection 57 comprend des branches 562 qui s'étendent sous chaque faisceau torsible 1. Chaque branche 562 s'étend donc radialement de la partie centrale 561 vers une extrémité 563. Cette extrémité 563 est fixée par un lien 564 au corps 11. Par exemple, le lien peut prendre la forme d'un collier.

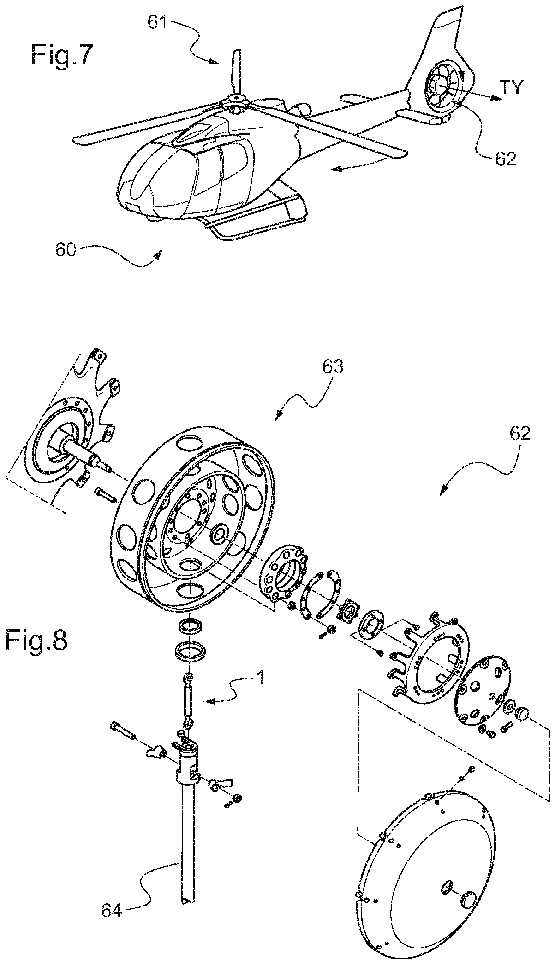

Les figures 7 à 9 illustrent des exemples d'utilisation d'un faisceau torsible selon l'invention.

En référence à la figure 7, un faisceau torsible peut être agencé sur un véhicule et notamment un aéronef 60. Cet aéronef 60 peut être un giravion, et par exemple un hélicoptère.

L'aéronef 60 peut comprendre au moins un rotor, tel qu'un rotor 61 participant principalement à la sustentation et/ou à la propulsion de l'aéronef et un rotor participant au moins au contrôle du mouvement en lacet de l'aéronef.

Ainsi, des faisceaux torsibles selon l'invention peuvent être agencés sur un rotor pour relier une pale à un moyeu.

La figure 8 illustre un faisceau torsible selon la figure 1 à fixer à une pale 64 et à un moyeu 63.

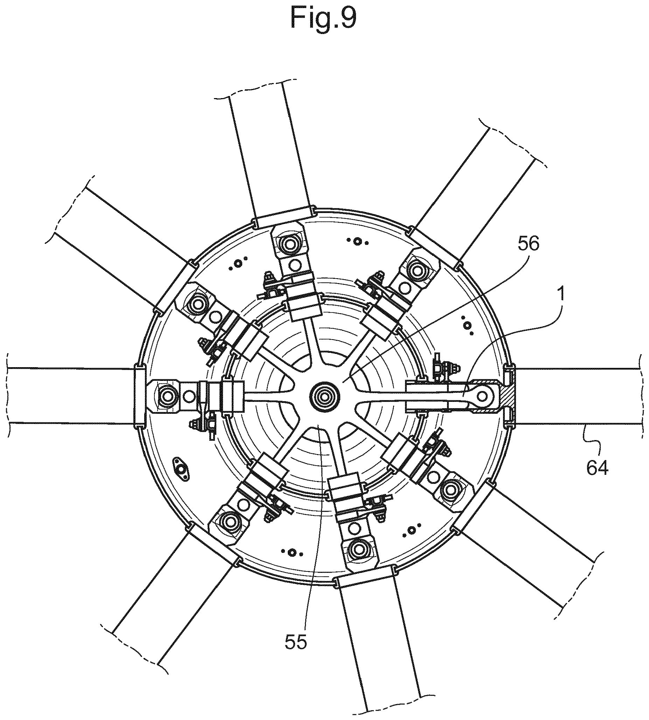

La figure 9 illustre un ensemble 55 de faisceaux torsibles relié à des pales 64.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est défini par le jeu de revendications.

## Revendications

1. Faisceau torsible (1) comprenant une pluralité de lames (5) empilées les unes sur les autres selon un axe en élévation (Z), chaque lame (5) comprenant successivement le long d'un axe d'extension (X) un tronçon de corps (21) puis un tronçon de raccordement distal (22) puis un tronçon distal (23) qui forment respectivement une strate d'un corps (11) et d'une zone de raccordement distale (12) et d'une attache distale (13) du faisceau torsible (1), l'attache distale (13) comprenant un moyen de fixation (131) permettant de fixer ladite attache distale (13) à une pale (64), ledit faisceau torsible (1) s'étendant en épaisseur selon un axe en élévation (Z) orthogonal à l'axe d'extension (X) d'une première face (31) d'une lame à une deuxième face (32) d'une autre lame, le faisceau torsible (1) comprenant un pourtour muni d'un flanc (33) s'étendant en élévation de la première face (31) à la deuxième face (32), chaque tronçon de corps (21) s'étendant transversalement d'une partie dudit flanc dite « premier flanc latéral (211) » vers une partie dudit flanc dit «deuxième flanc latéral (212) », chaque tronçon de raccordement distal (22) s'étendant transversalement d'une partie dudit flanc dite « premier flanc de raccordement distal (221) » qui prolonge le premier flanc latéral (211) de la lame vers une partie dudit flanc dit « deuxième flanc de raccordement distal (222) » qui prolonge le deuxième flanc latéral (212) de la lame, chaque lame comprenant dans ladite attache distale (13) un tronçon dudit flanc dit « flanc d'extrémité distal (232) » qui s'étend du premier flanc de raccordement distal (221) au deuxième flanc de raccordement distal (222) de la lame, lesdites lames formant au moins un élément feuilleté large (8) et un élément feuilleté étroit (6, 7) :
- lesdits tronçons de corps (21) étant superposées et identiques au niveau dudit corps (11), chaque tronçon de corps (21) présentant une largeur de corps (401) parallèlement à un axe (Y) orthogonal à l'axe d'extension (X) et à l'axe en élévation (Z), cette largeur de corps (401) étant minimale au niveau d'un ventre (213) du corps, ladite largeur de corps (401) augmentant longitudinalement selon un premier sens (501) allant du ventre (213) vers la zone de raccordement distale (12) et selon un deuxième sens (502) opposé au premier sens (501), ladite largeur de corps (401) d'une lame étant maximale au niveau d'une section d'interface (214) avec la zone de raccordement distale (12),
- lesdits tronçons distaux (23) étant superposées et identiques au niveau de l'attache distale (13),
- chaque tronçon de raccordement distal (22) d'un élément feuilleté large (8) étant en saillie latérale par rapport au premier flanc de raccordement distal (221) et au deuxième flanc de raccordement distal (222) de chaque tronçon de raccordement distal (22) d'un élément feuilleté étroit (6, 7),
- le premier flanc de raccordement distal (221) et le deuxième flanc de raccordement distal (222) de chaque lame suivant chacun une courbe (223) concave non circulaire, le tronçon de raccordement distal (22) de chaque lame présentant une largeur distale (402) entre son premier flanc de raccordement distal (221) et son deuxième flanc de raccordement distal (222) qui augmente selon ledit premier sens (501),
**caractérisé en ce que** la largeur de corps (401) varie continûment entre ledit ventre (213) et la zone de raccordement distale (12), et **en ce que** ledit faisceau torsible (1) comporte une gaine (40) rétractable agencée autour dudit corps (11).

2. Faisceau torsible selon la revendication 1,
**caractérisé en ce que** chaque lame présente une épaisseur (403) constante en élévation entre une face dite « face inférieure (21) » et une face dite « face supérieure (52) », chaque lame étant plane en étant contenue dans un plan présentant une épaisseur égale à l'épaisseur de la lame.

3. Faisceau torsible selon l'une quelconque des revendications 1 à 2,
**caractérisé en ce que** ledit ventre (213) est positionné longitudinalement au niveau d'un plan central du corps (11).

4. Faisceau torsible selon l'une quelconque des revendications 1 à 3,
**caractérisé en ce qu'**au moins un des premier flanc latéral (211) et deuxième flanc latéral (212) décrit un arc d'un cercle présentant un rayon dit « rayon latéral (R1) »

5. Faisceau torsible selon l'une quelconque des revendications 1 à 4,
**caractérisé en ce que** chaque premier flanc de raccordement distal (221) et chaque deuxième flanc de raccordement distal (222) décrivent une dite courbe qui est évolutive (223) en présentant successivement en partant du corps (11) vers l'attache distale (13) un tronçon en arc de cercle (224) présentant un premier rayon de raccordement (R2) et un tronçon en arc de cercle (225) présentant un deuxième rayon de raccordement (R3), le premier rayon de raccordement (R2) étant supérieur au deuxième rayon de raccordement (R3).

6. Faisceau torsible selon la revendication 4 et la revendication 5,
**caractérisé en ce que** le rayon latéral (R1) est supérieur au premier rayon de raccordement (R2).

7. Faisceau torsible selon l'une quelconque des revendications 1 à 6,
**caractérisé en ce que** ledit faisceau torsible (1) comporte en élévation un élément feuilleté étroit dit « premier élément feuilleté étroit (6) » muni d'une pluralité de lames, puis un élément feuilleté large (8) muni d'une pluralité de lames puis un élément feuilleté étroit dit « deuxième élément feuilleté étroit (7) » muni d'une pluralité de lames, le deuxième élément feuilleté étroit (7) étant à l'aplomb du premier élément feuilleté étroit (6).

8. Faisceau torsible selon la revendication 7,
**caractérisé en ce que** le deuxième élément feuilleté étroit (7) est identique au premier élément feuilleté étroit (6).

9. Faisceau torsible selon l'une quelconque des revendications 1 à 8,
**caractérisé en ce que** chaque lame (5) comprenant un tronçon de raccordement proximal (24) formant une zone de raccordement proximale (14), ledit corps (11) s'étend longitudinalement entre la zone de raccordement proximale (14) et la zone de raccordement distale (12), chaque tronçon de raccordement proximal (24) s'étendant transversalement d'une partie dudit flanc dite « premier flanc de raccordement proximal (241) » prolongé selon le premier sens par le premier flanc latéral (211) de la lame vers une partie dudit flanc dit « deuxième flanc de raccordement proximal (242) » prolongé selon le premier sens par le deuxième flanc latéral (212) de la lame, chaque tronçon de raccordement proximal (24) d'un élément feuilleté large (8) est en saillie latérale par rapport au premier flanc de raccordement proximal (241) et au deuxième flanc de raccordement proximal (242) de chaque tronçon de raccordement proximal (24) d'un élément feuilleté étroit (6, 7), le premier flanc de raccordement proximal (241) et le deuxième flanc de raccordement proximal (242) de chaque lame suivant chacun une courbe (223) concave non circulaire, le tronçon de raccordement proximal (24) de chaque lame présentant une largeur proximale entre son premier flanc de raccordement proximal et son deuxième flanc de raccordement proximal qui augmente selon ledit deuxième sens.

10. Faisceau torsible selon la revendication 9,
**caractérisé en ce que** chaque lame comprenant successivement le long dudit axe d'extension (X) un tronçon d'attache proximal (25) puis ledit tronçon de raccordement proximal (24), lesdits tronçons d'attache proximaux (24) formant une attache proximale (14) apte à être fixée à un moyeu (63), lesdits tronçons d'attache proximaux (24) sont superposés et identiques au niveau de l'attache proximale (14).

11. Ensemble (55) de faisceaux torsibles comprenant un organe central (56) mobile en rotation autour d'un axe de rotation (AXROT), ledit ensemble (55) de faisceaux torsibles comprenant une pluralité de faisceaux torsibles (5) s'étendant radialement à partir dudit organe central (56),
**caractérisé en ce que** chaque faisceau torsible (1) est selon la revendication 9, ladite zone de raccordement proximale (14) de chaque faisceau torsible (1) étant attachée audit organe central (56).

12. Ensemble de faisceau selon la revendication 11,
**caractérisé en ce que** ledit ensemble (55) comporte une étoile de protection (57), ladite étoile de protection (57) comprenant une partie centrale (561) conformée à l'organe central (56) et agencée contre l'organe central (56), ladite étoile de protection (57) comprenant des branches (562) s'étendant partiellement sous chaque faisceau torsible (1), chaque branche (562) s'étendant radialement de la partie centrale (561) vers une extrémité (563) attachée par un lien (564) au corps (11) d'un faisceau torsible (1).

13. Rotor (62) muni d'un moyeu (63) portant une pluralité de pales (64), chaque pale (64) étant fixée à un faisceau torsible (1),
**caractérisé en ce que** chaque faisceau torsible (1) est selon l'une quelconque des revendications 1 à 11, ladite zone de raccordement distale (12) de chaque faisceau torsible (1) étant attachée à une pale (64).

## Patentansprüche

1. Verdrehbarer Träger (1) mit einer Mehrzahl von Lamellen (5), die übereinander entlang einer Höhenachse (Z) gestapelt sind,
wobei jede Lamelle (5) nacheinander entlang einer Erstreckungsachse (X) einen Körperabschnitt (21), dann einen distalen Verbindungsabschnitt (22) und dann einen distalen Abschnitt (23) umfasst, die jeweils eine Schicht eines Körpers (11), einer distalen Verbindungszone (12) und eines distalen Anschlusses (13) des verdrehbaren Trägers (1) bilden, wobei der distale Anschluss (13) ein Befestigungsmittel (131) zur Befestigung des distalen Anschlusses (13) an einem Blatt (64) umfasst, wobei sich der verdrehbare Träger (1) in seiner Dicke entlang einer Höhenachse (Z) orthogonal zur Erstreckungsachse (X) von einer ersten Seite (31) einer Lamelle zu einer zweiten Seite (32) einer anderen Lamelle erstreckt, wobei der verdrehbare Träger (1) einen Umfang umfasst, der mit einer Flanke (33) versehen ist, die sich in Höhe von der ersten Seite (31) zu der zweiten Seite (32) erstreckt, jeder Körperabschnitt (21) sich quer von einem als "erste Seitenflanke (211)" bezeichneten Abschnitt der Flanke zu einem als "zweite Seitenflanke (212)" bezeichneten Abschnitt der Flanke erstreckt, jeder distale Verbindungsabschnitt (22) sich quer von einem als "erste distale Verbindungsflanke (221)" bezeichneten Abschnitt der Flanke, der die erste Seitenflanke (211) der Lamelle verlängert, zu einem als "zweite distale Verbindungsflanke (222)" bezeichneten Abschnitt der Flanke erstreckt, der die zweite Seitenflanke (212) der Lamelle verlängert, wobei jede Lamelle in dem distalen Anschluss (13) einen als "distale Endflanke (232)" bezeichneten Abschnitt der Flanke aufweist, der sich von der ersten distalen Verbindungsflanke (221) zur zweiten distalen Verbindungsflanke (222) des Blattes erstreckt,
wobei die Lamellen mindestens ein breites laminiertes Element (8) und ein schmales laminiertes Element (6, 7) bilden:
- wobei die Körperabschnitte (21) in Höhe des Körpers (11) übereinander angeordnet und identisch sind, wobei jeder Körperabschnitt (21) parallel zu einer zu der Erstreckungsachse (X) und der Höhenachse (Z) orthogonalen Achse (Y) eine Körperbreite (401) aufweist, wobei die Körperbreite (401) an einem Bauch (213) des Körpers minimal ist, die Körperbreite (401) in Längsrichtung in einer ersten Richtung (501) vom Bauch (213) zur distalen Verbindungszone (12) und in einer zu der ersten Richtung (501) entgegengesetzten zweiten Richtung (502) zunimmt, wobei die Körperbreite (401) einer Lamelle an einem Schnittstellenabschnitt (214) zu der distalen Verbindungszone (12) maximal ist,
- wobei die distalen Abschnitte (23) in Höhe des distalen Anschlusses (13) übereinander angeordnet und identisch sind,
- wobei jeder distale Verbindungsabschnitt (22) eines breiten laminierten Elements (8) über die erste distale Verbindungsflanke (221) und die zweite distale Verbindungsflanke (222) jedes distalen Verbindungsabschnitts (22) eines schmalen laminierten Elements (6, 7) seitlich übersteht,
- die erste distale Verbindungsflanke (221) und die zweite distale Verbindungsflanke (222) jeder Lamelle jeweils einer unrunden konkaven Kurve (223) folgen, wobei der distale Verbindungsabschnitt (22) jeder Lamelle eine distale Breite (402) zwischen ihrer ersten distalen Verbindungsflanke (221) und ihrer zweiten distalen Verbindungsflanke (222) aufweist, die sich in der ersten Richtung (501) erhöht,
**dadurch gekennzeichnet, dass** die Körperbreite (401) zwischen dem Bauch (213) und der distalen Verbindungszone (12) kontinuierlich variiert,
und dass der verdrehbare Träger (1) eine um den Körper (11) herum angeordnete rückziehbare Hülle (40) umfasst.

2. Verdrehbarer Träger nach Anspruch 1,
**dadurch gekennzeichnet, dass** jede Lamelle eine konstante Dicke (403) in der Höhenrichtung zwischen einer als "Unterseite (21)" bezeichneten Seite und einer als "Oberseite (52)" bezeichneten Seite aufweist, wobei jede Lamelle flach ist, indem sie in einer Ebene mit einer Dicke enthalten ist, die gleich der Dicke der Lamelle ist.

3. Verdrehbarer Träger nach einem der Ansprüche 1 bis 2,
**dadurch gekennzeichnet, dass** der Bauch (213) in Längsrichtung in einer Mittelebene des Körpers (11) positioniert ist.

4. Verdrehbarer Träger nach einem der Ansprüche 1 bis 3,
**dadurch gekennzeichnet, dass** von der ersten Seitenflanke (211) und der zweiten Seitenflanke (212) mindestens eine einen Kreisbogen mit einem als "Seitenradius (R1)" bezeichneten Radius beschreibt.

5. Verdrehbarer Träger nach einem der Ansprüche 1 bis 4,
**dadurch gekennzeichnet, dass** jede erste distale Verbindungsflanke (221) und jede zweite distale Verbindungsflanke (222) eine besagte Kurve beschreibt, die evolutionär (223) ist, indem sie ausgehend vom Körper (11) in Richtung des distalen Anschlusses (13) nacheinander einen bogenförmigen Abschnitt (224) mit einem ersten Verbindungsradius (R2) und einen bogenförmigen Abschnitt (225) mit einem zweiten Verbindungsradius (R3) aufweist, wobei der erste Verbindungsradius (R2) größer als der zweite Verbindungsradius (R3) ist.

6. Verdrehbarer Träger nach Anspruch 4 und Anspruch 5,
**dadurch gekennzeichnet, dass** der Seitenradius (R1) größer ist als der erste Verbindungsradius (R2).

7. Verdrehbarer Träger nach einem der Ansprüche 1 bis 6,
**dadurch gekennzeichnet, dass** der verdrehbare Träger (1) in der Höhe ein als "erstes schmales laminiertes Element (6)" bezeichnetes schmales laminiertes Element, das eine Mehrzahl von Lamellen aufweist, dann ein breites laminiertes Element (8), das eine Mehrzahl von Lamellen aufweist, dann ein als "zweites schmales laminiertes Element (7)" bezeichnetes schmales laminiertes Element umfasst, wobei das zweite schmale laminierte Element (7) eine Mehrzahl von Lamellen aufweist, wobei das zweite schmale laminierte Element (7) lotrecht zum ersten schmalen laminierten Element (6) liegt.

8. Verdrehbarer Träger nach Anspruch 7,
**dadurch gekennzeichnet, dass** das zweite schmale laminierte Element (7) identisch mit dem ersten schmalen laminierten Element (6) ist.

9. Verdrehbarer Träger nach einem der Ansprüche 1 bis 8,
**dadurch gekennzeichnet, dass** jede Lamelle (5) einen proximalen Verbindungsabschnitt (24) umfasst, der eine proximale Verbindungszone (14) bildet, wobei sich der Körper (11) in Längsrichtung zwischen der proximalen Verbindungszone (14) und der distalen Verbindungszone (12) erstreckt, jeder proximale Verbindungsabschnitt (24) sich quer von einem als "erste proximale Verbindungsflanke (241)" bezeichneten Abschnitt der Flanke, der in der ersten Richtung durch die erste Seitenflanke (211) der Lamelle verlängert ist, zu einem als "zweite proximale Verbindungsflanke (242)" bezeichneten Abschnitt der Flanke erstreckt, der in der ersten Richtung durch die zweite Seitenflanke (212) der Lamelle verlängert ist, jeder proximale Verbindungsabschnitt (24) eines breiten laminierten Elements (8) seitlich über die erste proximale Verbindungsflanke (241) und die zweite proximale Verbindungsflanke (242) jedes proximalen Verbindungsabschnitts (24) eines schmalen laminierten Elements (6, 7) übersteht, die erste proximale Verbindungsflanke (241) und die zweite proximale Verbindungsflanke (242) jeder Lamelle jeweils einer unrunden konkaven Kurve (223) folgen, wobei der proximale Verbindungsabschnitt (24) jeder Lamelle eine proximale Breite zwischen ihrer ersten proximalen Verbindungsflanke und ihrer zweiten proximalen Verbindungsflanke aufweist, die in der zweiten Richtung zunimmt.

10. Verdrehbarer Träger nach Anspruch 9,
**dadurch gekennzeichnet, dass** jede Lamelle entlang der Erstreckungsachse (X) nacheinander einen proximalen Anschlussabschnitt (25) und dann den proximalen Verbindungsabschnitt (24) aufweist, wobei die proximalen Anschlussabschnitte (24) einen proximalen Anschluss (14) bilden, der an einer Nabe (63) befestigbar ist, wobei die proximalen Anschlussabschnitte (24) in Höhe des proximalen Anschlusses (14) übereinander angeordnet und identisch sind.

11. Anordnung (55) von verdrehbaren Trägern mit einem um eine Drehachse (AXROT) drehbaren zentralen Element (56), wobei die Anordnung (55) von verdrehbaren Trägern eine Mehrzahl von verdrehbaren Trägern (5) umfasst, die sich radial von dem zentralen Element (56) erstrecken,
**dadurch gekennzeichnet, dass** jeder verdrehbare Träger (1) nach Anspruch 9 ist, wobei die proximale Verbindungszone (14) jedes verdrehbaren Trägers (1) an dem zentralen Element (56) angeschlossen ist.

12. Trägeranordnung nach Anspruch 11,
**dadurch gekennzeichnet, dass** die Anordnung (55) einen Schutzstern (57) umfasst, wobei der Schutzstern (57) einen zentralen Abschnitt (561) umfasst, der an das zentrale Element (56) angepasst und gegen das zentrale Element (56) angeordnet ist, wobei der Schutzstern (57) Zweige (562) umfasst, die sich teilweise unter jedem verdrehbaren Träger (1) erstrecken, wobei sich jeder Zweig (562) radial vom zentralen Abschnitt (561) zu einem Ende (563) erstreckt, das durch eine Verbindung (564) an den Körper (11) eines verdrehbaren Trägers (1) angeschlossen ist.

13. Rotor (62) mit einer Nabe (63), die eine Mehrzahl von Blättern (64) trägt, wobei jedes Blatt (64) an einem verdrehbaren Träger (1) befestigt ist,
**dadurch gekennzeichnet, dass** jeder verdrehbare Träger (1) nach einem der Ansprüche 1 bis 11 ist, wobei die distale Verbindungszone (12) jedes drehbaren Trägers (1) an ein Blatt (64) angeschlossen ist.

## Claims

1. Tension-torsion strap (1) comprising a plurality of laminae (5) stacked one on top of the other along an elevation axis (Z), each lamina (5) comprising, successively along an extension axis (X), a body portion (21), then a distal connection portion (22), then a distal portion (23), which portions respectively form a layer of a body (11) and of a distal connection region (12) and of a distal fastener (13) of the tension-torsion strap (1), the distal fastener (13) comprising a fixing means (131) for fixing said distal fastener (13) to a blade (64), said tension-torsion strap (1) extending in thickness along an elevation axis (Z) orthogonal to the extension axis (X) from a first face (31) of a lamina to a second face (32) of another lamina, the tension-torsion strap (1) comprising a periphery provided with an edge (33) extending in elevation from the first face (31) to the second face (32), each body portion (21) extending transversely from one part of said edge referred to as "first side edge (211)" to a part of said edge referred to as "second side edge (212)", each distal connection portion (22) extending transversely from one part of said edge referred to as "first distal connection edge (221)", which extends the first side edge (211) of the lamina, to a part of said edge referred to as "second distal connection edge (222)", which extends the second side edge (212) of the lamina, each lamina comprising in said distal fastener (13) a portion of said edge referred to as "distal end edge (232)", which extends from the first distal connection edge (221) to the second distal connection edge (222) of the lamina, said laminae forming at least one wide laminated element (8) and one narrow laminated element (6, 7):
- said body portions (21) being stacked and identical in the region of said body (11), each body portion (21) having a body width (401) parallel to an axis (Y) orthogonal to the extension axis (X) and the elevation axis (Z), said body width (401) being at a minimum in the region of a centre (213) of the body, said body width (401) increasing longitudinally in a first direction (501) from the centre (213) to the distal connection region (12) and in a second direction (502) opposite the first direction (501), said body width (401) of a lamina being at a maximum in the region of an interface section (214) with the distal connection region (12),
- said distal portions (23) being stacked and identical in the region of the distal fastener (13),
- each distal connection portion (22) of a wide laminated element (8) protruding laterally relative to the first distal connection edge (221) and the second distal connection edge (222) of each distal connection portion (22) of a narrow laminated element (6, 7),
- the first distal connection edge (221) and the second distal connection edge (222) of each lamina each following a non-circular, concave curve (223), the distal connection portion (22) of each lamina having a distal width (402) between its first distal connection edge (221) and its second distal connection edge (222) which increases in the first direction (501),
**characterised in that** the body width (401) varies continuously between the centre (213) and the distal connection region (12),
and **in that** the tension-torsion strap (1) includes a shrink sleeve (40) arranged around said body (11).

2. Tension-torsion strap according to claim 1,
**characterised in that** each lamina has a thickness (403) that is constant in elevation between a face referred to as "lower face (21)" and a face referred to as "upper face (52)", each lamina being planar **in that** it is continuous in a plane having a thickness equal to the thickness of the lamina.

3. Tension-torsion strap according to either of claims 1 to 2,
**characterised in that** said centre (213) is positioned longitudinally in the region of the central plane of the body (11).

4. Tension-torsion strap according to any of claims 1 to 3,
**characterised in that** at least one of the first side edge (211) and second side edge (212) describes an arc of a circle having a radius referred to as "side radius (R1)".

5. Tension-torsion strap according to any of claims 1 to 4,
**characterised in that** each first distal connection edge (221) and each second distal connection edge (222) describes what is referred to as a curve which is evolutive (223) **in that** it has, successively from the body (11) to the distal fastener (13), a circular-arc portion (224) having a first connection radius (R2) and a circular-arc portion (225) having a second connection radius (R3), the first connection radius (R2) being greater than the second connection radius (R3).

6. Tension-torsion strap according to claim 4 and claim 5,
**characterised in that** the side radius (R1) is greater than the first connection radius (R2).

7. Tension-torsion strap according to any of claims 1 to 6,
**characterised in that** said tension-torsion strap (1) includes, in elevation, a narrow laminated element, referred to as "first narrow laminated element (6)", provided with a plurality of laminae, then a wide laminated element (8) provided with a plurality of laminae, then a narrow laminated element, referred to as "second narrow laminated element (7)", provided with a plurality of laminae, the second narrow laminated element (7) being vertically in line with the first narrow laminated element (6).

8. Tension-torsion strap according to claim 7,
**characterised in that** the second narrow laminated element (7) is identical to the first narrow laminated element (6).

9. Tension-torsion strap according to any of claims 1 to 8,
**characterised in that**, each lamina (5) comprising a proximal connection portion (24) that forms a proximal connection region (14), said body (11) extends longitudinally between the proximal connection region (14) and the distal connection region (12), each proximal connection portion (24) extending transversely from one part of said edge referred to as "first proximal connection edge (241)", extended in the first direction by the first side edge (211) of the lamina, to a part of said lamina referred to as "second proximal connection edge (242)", extended in the first direction by the second side edge (212) of the lamina, each proximal connection portion (24) of a wide laminated element (8) protruding laterally with respect to the first proximal connection edge (241) and the second proximal connection edge (242) of each proximal connection portion (24) of a narrow laminated element (6, 7), the first proximal connection edge (241) and the second proximal connection edge (242) of each lamina each following a non-circular, concave curve (223), the proximal connection portion (24) of each lamina having a proximal width between its first proximal connection edge and its second proximal connection edge which increases in the second direction.

10. Tension-torsion strap according to claim 9,
**characterised in that**, each lamina comprising, successively along said extension axis (X), a proximal fastener portion (25), then said proximal connection portion (24), said proximal fastener portions (24) forming a proximal fastener (14) capable of being fixed to a hub (63), said proximal fastener portions (24) are stacked and identical in the region of the proximal fastener (14).

11. Assembly (55) of tension-torsion straps comprising a central member (56) that is rotatably movable about an axis of rotation (AXROT), said assembly (55) of tension-torsion straps comprising a plurality of tension-torsion straps (5) extending radially from said central member (56),
**characterised in that** each tension-torsion strap (1) is according to claim 9, said proximal connection region (14) of each tension-torsion strap (1) being fastened to said central member (56).

12. Strap assembly according to claim 11,
**characterised in that** said assembly (55) includes a protective star (57), said protective star (57) comprising a central part (561) in the shape of the central member (56) and arranged against the central member (56), said protective star (57) comprising arms (562) extending in part under each tension-torsion strap (1), each arm (562) extending radially from the central part (561) to an end (563) attached by a link (564) to the body (11) of a tension-torsion strap (1).

13. Rotor (62) provided with a hub (63) supporting a plurality of blades (64), each blade (64) being fixed to a tension-torsion strap (1),
**characterised in that** each tension-torsion strap (1) is according to any of claims 1 to 11, said distal connection region (12) of each tension-torsion strap (1) being fastened to a blade (64).
